# EUROPEAN PATENT APPLICATION

(11) **EP 1 404 063 A2**
(43) Date of publication of application: **31.03.2004**
(21) Application number: 03292329.4
(22) Date of filing: 23.09.2003
(51) Int. Cl.: H04L 12/40

(54) **Communication circuit for a vehicle**

(30) Priority: 24.09.2002 US 412819 P
(71) Applicant: Envitech Automation Inc., Pointe-Claire, Québec H9R 5P9 (CA)
(72) Inventor: Catterall, Chris, Pierrefonds Québec H9H 5G3 (CA); Rousseau, Pierre, Laval Québec H7Y 2C8 (CA); Bouthillier, Sebastien, Les Coteaux Québec J7X 1A2 (CA); Gravel, Anick, Vaudreuil Dorion Québec J7V 2S1 (CA); Jama, Ishak, Montréal Québec H4J 2G7 (CA); Chaloux, Christian, Laval Québec H7N 3N3 (CA); Daunais, Jason, Pierrefonds Québec H9J 3L2 (CA); Turgeon, Karine, St-Lazare Québec J7T 2M7 (CA)
(74) Representative: Bonnetat, Christian

(57) **Abstract**

A communication circuit for use within a vehicle (10, 14) includes a first network port and a second network port that is remotely located from the first network port. The networks are digitally connected together and digitally communicate a signal therebetween. The communication circuit is used between two or more coupled train vehicles (10, 14).

## Description

### FIELD OF THE INVENTION

The present invention concerns communication networks and more particularly to a digital system for transmitting bi-directional multi-media and data signals within and between train vehicles.

### BACKGROUND OF THE INVENTION

Communication systems are well known and widely used in the transportation industry. For applications such as intra and inter vehicle communications on board articulated vehicles such as trains and the like, communication systems typically include a number of electrical large cables that transfer data signals between audio and visual components between train vehicles. Typically, the train operator relays messages from the train cab via the audio and visual components to the passengers and often to another train operator who may be located remotely from the train cab. This type of communication, while straightforward, suffers from a number of significant problems. The electrical cables are often cumbersome to handle and connect and are prone to damage by the train's articulated sections. The audio and visual components often require rebooting after a connection has been made, which may delay the train's entry into service. The harsh environments in which the electrical cables are used often hinder the transmission of fast, high quality data. This is particularly problematic in subway trains, where high temperatures, electromagnetic fields and vibration cause signal interference. Additional components may be added to the network, but this often requires separate and additional cables to be connected, which in turns adds to the size of the cable bundle between the train vehicles.

In an attempt to overcome some of the aforesaid problems, the Institute of Electrical and Electronics Engineers (IEEE) has issued standard IEEE-P-1473 (Standard for Communications Protocol Aboard Trains) defining two digital networks for rail transit applications that are present in today's train vehicles. These networks do not, however, provide the data bandwidth necessary for multimedia communications, especially between connected train cars. Other control and communication networks for use between connected train cars are available with existing analog-type technology, but are complex to connect, and do not provide the versatility of a digital solution.

A digital network that enables, for example, passenger communication to a train driver or communication between two drivers located at different locations in the train, while simultaneously conveying playing audio messages, advertising, and displaying information on in-train screens, would be a significant improvement in the train industry. Moreover, for ease of use, the network should be designed with few space conserving connections, while allowing easy upgrades or addition of new communicational units as they become available.

### SUMMARY OF THE INVENTION

The present invention reduces the difficulties and disadvantages of the prior art by providing an Internet Protocol (IP) network or circuit that allows integrated high-speed multimedia digital communication between Local Area Networks (LANs) located within or between train vehicles. A novel digital link is provided, which connects the LANs and the train vehicles together and communicates the data therebetween via an interface. Advantageously, the LANs are used to transmit bi-directional multimedia and data signals at high speed to the remote locations in the train while significantly reducing or essentially eliminating the aforesaid problems of poor quality reception and transfer of data. In addition, the circuit uses well-established ETHERNET™ technology and provides multiple ports to attach peripheral devices thereto. The single digital link is easy to connect between train vehicles and is significantly user-friendlier than the aforesaid connections. In addition, the IP network supports different data links and physical layer technologies, such as Wireless Local Area Network and the like. The IP network provides static and dynamic mobility that enables operation during a train's travel and during the interchange of cars, without the need to reboot the system network. The network has a reliable open architecture that is easy to upgrade by adding or withdrawing new or existing network communication devices such as, for example, video monitors and the like. Moreover, the network is adaptable to the type of environment associated with trains, buses, subways, trams and the like, and reliably operates where high levels of vibration, temperature, and electromagnetic fields occur.

In accordance with an aspect of the present invention, there is provided a communication circuit for use within a vehicle, the circuit comprising: a first network port; and a second network port located remote from the first network port and digitally connected thereto for digitally communicating a signal therebetween.

Preferably, the first network port and the second network port are connected by a digital link.

Preferably, the first network port is connected to a first network segment and the second network port is connected to a second network segment. Conveniently, a third network segment is connected between the first network segment and the second network segment.

Preferably, each network segment includes a multi-port network hub, the first and second network ports being connected to their respective multi-port network hubs. Conveniently, at least one peripheral network communication device is connected to each of the multi- port network hubs. Conveniently, at least one of the peripheral devices is a control head. Conveniently, at least one peripheral communication device is connected to the control head. Each multi-port network hub is a multi-port ETHERNET™ network hub.

Preferably, the first, the second and the third network define a first Local Area Network. The first, second and third network segments are respectively first, second and third Local Area Network subsystems.

Conveniently, the digital link is an ETHERNET™ digital link.

Preferably, a train includes at least two vehicles connected together by a coupler, the first Local Area Network being located in one vehicle, a second Local Area Network being located in the other vehicle. Conveniently, the first Local Area Network includes a first interface and the second Local Area Network includes a second interface.

Preferably, the first interface is a control unit having a digital link receiver port and a wire connector connected to the first network port.

Conveniently, at least one of the vehicles is sectioned and articulated. Conveniently, the coupler includes a digital link integral therewith.

Preferably, the digital link is an RS-485 connection. Conveniently, the control unit includes a plurality of peripheral device connector ports.

In accordance with another aspect of the present invention, there is provided a communication circuit for use on board a train having at least two vehicles coupled together, the circuit comprising: a first Local Area Network having a first interface and located in one vehicle; a second Local Area Network having a second interface and located in the other vehicle; and the first interface and the second interface being connected by a digital link for digitally communicating a signal between the first and the second Local Area Networks.

Other objects and advantages of the present invention will become apparent from a careful reading of the detailed description provided herein, within appropriate reference to the accompanying drawings.

### BRIEF DESCRIPTION OF THE DRAWINGS

Further aspects and advantages of the present invention will become better understood with reference to the description in association with the following drawings, in which:
**Figure 1** is a schematic view of two train vehicles with a digital connection therebetween; and
**Figure 2** is a schematic diagram illustrating an embodiment of a circuit for communication on board a train.

### DETAILED DESCRIPTION OF THE PREFERRED EMBODIMENT

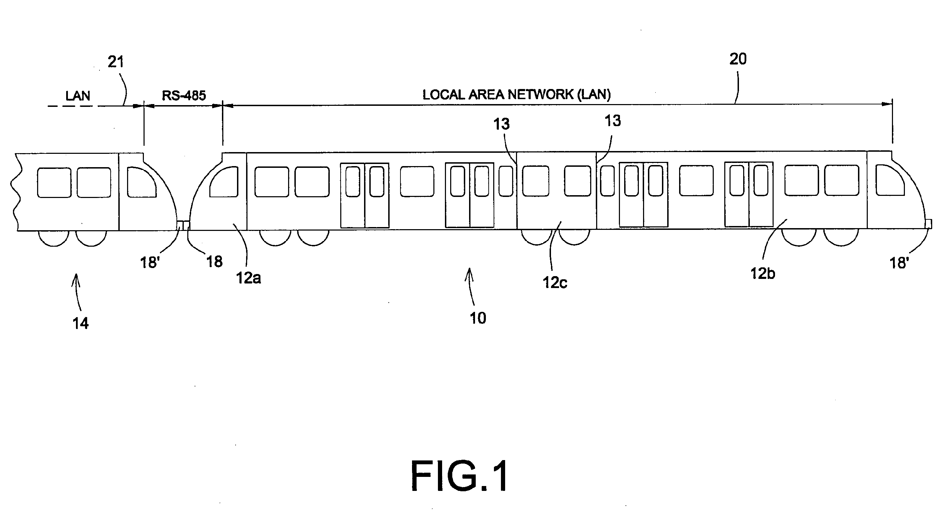

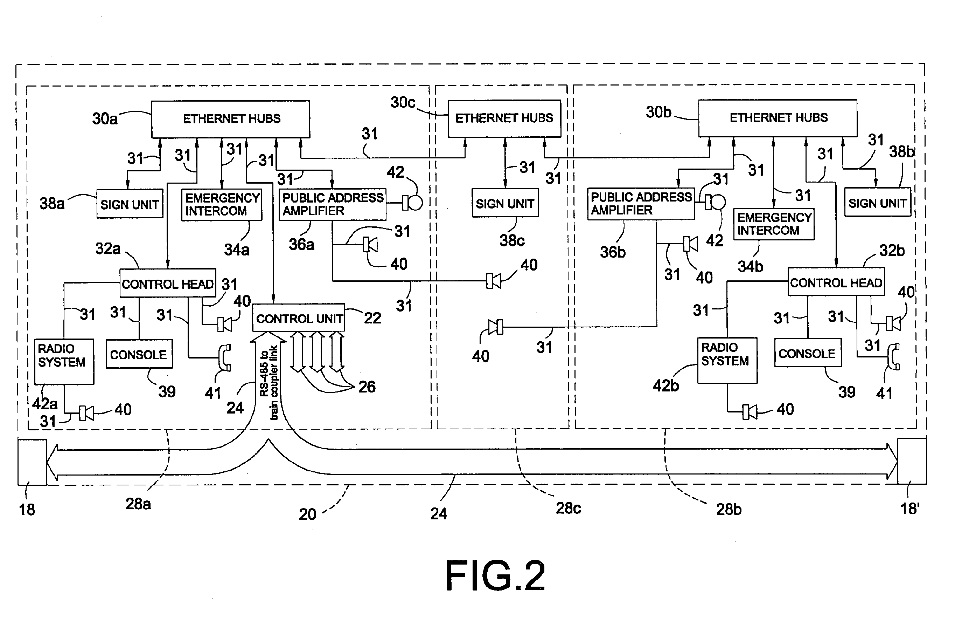

Referring now to Figures 1 and 2, a first train vehicle is illustrated generally at 10 and is subdivided into three articulated car sections 12a, 12b, and 12c. A second train vehicle 14, which may also be articulated and sectioned, is connected to the first vehicle 10 by train couplers 18, 18'. One skilled in the art will recognize that that although the illustrated embodiment is a train, the present invention can also be used with other ground-based vehicles without deviating from the scope of the invention. Broadly speaking, the first train vehicle 10 includes an embodiment of an IP network or circuit for integrated communication on board a train in accordance with the present invention. The circuit includes a first Local Area Network (LAN) 20 that is connected to a second LAN 21 located in the second train car 14 via a digital RS-485 train coupler link 24 for communications between the two train vehicles 10, 14. This establishes a bi-directional and transmission of an RS-485 digital signal between the two train vehicles 10, 14. For communication between the LANs segments located within each of the train vehicles 10, 14, an ETHERNET™ digital link is used. Both the LANs are preferably based on ETHERNET™ technology as will be described below.

The digital RS-485 train coupler link 24 may be made out of two twisted pairs of wires. Preferably, one shielded twisted data pair of wires and a single reference wire are used, which are compliant to the RS-485 specifications and which can easily be plugged or unplugged between the train vehicles 10, 14 and links together the two LANs 20 installed in each train vehicle 10, 14, respectively, enabling high speed audio and video communications greater than 1 Mbps (Megabit per second). As readily understood by those skilled in the art, RS-485 data layer technology provides proven bi-directional communication capabilities with a large amplitude signal that ensures data integrity within the harsh EMI/EMC (Electromagnetic Interference / Electromagnetic Compatibility) environment of a train.

Referring specifically now to Figure 2, a control unit 22 is used for the LAN 20, and provides an interface to another LAN 21 of the train vehicle 14 with the digital RS-485 train coupler link 24 connected from the control unit 22 to the train coupler 18. The RS-485 train coupler link 24 is connected at both ends of the train car 10. A number of communication busses, links, or peripherals 26 such as an RS-232 connector, a Multi-Function Vehicle Bus, and an Integrated On-Board Information System are connected to the control unit 22. One skilled in the art will recognize that the interface may include a gateway or conversion circuit between the LAN interfaces (or ETHERNET™ link) and the RS-485 link. Additional busses, links, or peripherals 26 that do not support an Ethernet network interface may also be connected to the LAN 20 through the control unit 22 or through other interface devices.

The LAN 20 is divided into LAN subsystems 28a, 28b, 28c, which are located in each car section 12a, 12b, 12c, respectively of the first train vehicle 10. Similar LAN subsystems may also be located in the second train vehicle 14 and connected together using the digital link 24. Each LAN subsystem 28a, 28b, 28c includes a multi-port ETHERNET™ network hub 30a, 30b, 30c, respectively. The multi-port ETHERNET™ network hubs include a number of network ports, which are particularly well suited for the present invention since they reduce unnecessarily complex wiring across the articulated joints 13 that separate the car sections 12a, 12b and 12c in an articulated train vehicle. One network segment may have a network port connected thereto and located in one section of the vehicle 10, 14, while another second network port may be connected to a network segment located in another section of the vehicle 10, 14. The control unit 22 is connected via wires 31 to the multi-port ETHERNET™ network hub 30a, which in turn is connected via wires 31 to the multi-port ETHERNET™ network hubs 30b, 30c to ensure ETHERNET™ communication network interconnections. A number of peripheral devices 26 such as control heads 32a, 32b to allow an operator control of the network, emergency intercoms 34a, 34b, public address amplifiers 36a, 36b, and sign units 38a, 38b, 38c are connected via wires 31 to corresponding multi-port ETHERNET™ network hubs 30a, 30b, 30c to ensure ETHERNET™ communication network interconnections. Additional multi-port ETHERNET™ network hub(s) 30a, control head(s) 32a, emergency intercom(s) 34a, public address amplifier(s) 36a, sign unit(s) 38a, and other peripherals 26 may be added or removed depending upon the requirements of the train vehicle 10, provided that sufficient network ports are available in the multi-port ETHERNET™ network hub(s) 30a for interconnection in-between and as long as the capacity of the LAN 20 coupled with a RS-485 signal permits. For practical reasons the length of the RS-485 digital link is dependent upon the rate of data transmission and the quality of the coupling connections. A laptop computer or the like may be connected to any available ETHERNET™ hub to set, verify, and upgrade the LAN 20 and/or the IP protocol as required.

Each control head 32a, 32b in conjunction with a console 39, a handset 41, and a speaker 40 provide the audio and control interfaces between the train operator, located in any train vehicle 10, 14 of the train, and the LAN IP network 20 for integrated communications. A radio system, or handsets 42a, 42b, and speakers 40 are connected via wires 31 to the control heads 32a, 32b for security reasons. Each emergency intercom 34a, 34b provides a two-way full duplex audio communication between the passengers and any train operator using built-in microphone(s) and speaker(s) (not shown). A push-to-talk switch (not shown) on the handset 41 enables a train operator to control the direction of the communication. The public address amplifiers 36a, 36b provide a one-way audio communication for a public pre-recorded or live announcement to passengers by means of interior and exterior speakers 40. Microphones 42 are used to measure ambient noise and are connected via wires 31. The ambient noise is sampled to permit the public address amplifiers to automatically adjust the volume. The sign units 38a, 38b, 38c broadcast through visual front destination signs, run number signs, side destination signs and interior message signs (not shown) various messages to inboard and outboard passengers.

A software program (not shown), implementing a Plug-and-Play architecture, controls the LAN 20 combined with the RS-485 links 24, and allows for connection and/or voluntary or involuntary disconnection of a multi-port ETHERNET™ network hub 30a, control head 32a, emergency intercom 34a, public address amplifier 36a, sign unit 38a, or other peripherals 26 without interrupting the functioning of the LAN 20. The high mobility of interconnected LAN 20 is furthermore shown by the fact that the LAN 20 is understandably operational during the traveling of the train vehicles 10, 14, but is also demonstrated by the operation of the LAN 20 during the connection and/or disconnection of the train vehicles 10, 14, without having to reinitialize any part of the LAN 20. Other systems not described herein are incorporated into the software program, such as a network health monitoring system or the like verifying the conditions and functionalities of the LAN 20. Each control unit 22, multi-port ETHERNET™ network hub 30a, 30b, 30c, control head 32a, 32b, emergency intercom 34a, 34b, public address amplifier 36a, 36b, or sign unit 38a, 38b, 38c is powered by a main low voltage power supply (not shown) via a pair of wires (not shown), which may be optionally twisted. Individual power supplies could also be considered without departing from the scope of the present invention.

One skilled in the art will readily recognize that the IP network or LAN 20 of the present invention could support different data link and physical layer technologies, such as Wireless Local Area Network or the like, which would be a preferred alternative especially for the link in-between train couplers 18 and 18'.

While a specific embodiment has been described, those skilled in the art will recognize many alterations that could be made within the spirit of the invention, which is defined solely according to the following claims.

## Claims

1. A communication circuit for use within a vehicle (10, 14), the circuit comprising:
- a first network port; and
- a second network port located remote from the first network port and digitally connected thereto for digitally communicating a signal therebetween.

2. The circuit, according to claim 1, in which the first network port and the second network port are connected by a digital link.

3. The circuit, according to claim 2, in which the first network port is connected to a first network segment and the second network port is connected to a second network segment.

4. The circuit, according to claim 3, in which a third network segment is connected between the first network segment and the second network segment.

5. The circuit, according to claim 4, in which each network segment includes a multi-port network hub (30a, 30b, 30c), the first and second network ports being connected to their respective multi-port network hubs (30a, 30b, 30c).

6. The circuit, according to claim 5, in which at least one peripheral network communication device (34a, 34b, 36a, 38a, 38b, 38c, 32a, 32b) is connected to each of the multi-port network hubs (30a, 30b, 30c).

7. The circuit, according to claim 6, in which at least one peripheral network communication device is a control head (32a, 32b).

8. The circuit, according to claim 7, in which at least one peripheral communication device (39, 40, 41, 42a, 42b) is connected to the control head (32a, 32b).

9. The circuit, according to claim 8, in which each multi-port network hub (30a, 30b, 30c) is a multi-port ETHERNET™ network hub.

10. The circuit, according to claim 9, in which the first, the second and the third network segments define a first Local Area Network (20).

11. The circuit, according to claim 10, in which the first, second and third network segments are respectively first, second and third Local Area Network subsystems (28a, 28b, 28c).

12. The circuit, according to claim 11, in which the digital link is an ETHERNET™ digital link.

13. The circuit, according to claim 12, in which a train includes at least two vehicles (10, 14) connected together by a coupler, the first Local Area Network (20) being located in one vehicle (10), a second Local Area Network (21) being located in the other vehicle (14).

14. The circuit, according to claim 13, in which the first Local Area Network (10) includes a first interface and the second Local Area Network (21) includes a second interface.

15. The circuit, according to claim 14, in which the first interface is a control unit (22) having a digital link receiver port and a wire connector connected to the first network port.

16. The circuit, according to claim 15, in which at least one of the vehicles (10, 14) is sectioned and articulated.

17. The circuit, according to claim 16, in which the coupler includes a digital link (24) integral therewith.

18. The circuit, according to claim 17, in which the digital.link (24) is an RS-485 connection.

19. The circuit, according to claim 18, in which the control unit (22) includes a plurality of peripheral device connector ports.

20. The circuit, according to claim 19, in which the peripheral communication device include sign units, emergency intercoms, public address amplifiers, radio systems, consoles or laptop computers.

21. A communication circuit for use on board a train having at least two vehicles (10, 14) coupled together, the circuit comprising:
- a first Local Area Network (20) having a first interface and located in one vehicle (10);
- a second Local Area Network (21) having a second interface and located in the other vehicle (14); and
- the first interface and the second interface being connected by a digital link (24) for digitally communicating a signal between the first and the second Local Area Networks (20, 21).

22. The circuit, according to claim 21, in which each of the Local Area Networks (20, 21) includes first, second and third Local Area Network subsystems (28a, 28b, 28c).

23. The circuit, according to claim 22, in which each Local Area Network subsystems (28a, 28b, 28c) includes a multi-port network hub (30a, 30b, 30c).

24. The circuit, according to claim 23, in which at least one peripheral network communication device (34a, 34b, 36a, 38a, 38b, 38c, 32a, 32b) is connected to the multi-port network hub (30a, 30b, 30c).

25. The circuit, according to claim 24, in which at least one peripheral network communication device is a control head (32a, 32b).

26. The circuit, according to claim 25, in which at least one peripheral communication device (39, 40, 41, 42a, 42b) is connected to the control head (32a, 32b).

27. The circuit, according to claim 26, in which the multi-port network hub (30a, 30b, 30c) is an ETHERNET™ hub.

28. The circuit, according to claim 27, in which the first interface is a control unit (22) having a digital link receiver port and a wire connector connected to the multi-port network hub (30a).

29. The circuit, according to claim 28, in which the control unit (22) includes a plurality of peripheral device connector ports.

30. The circuit, according to claim 29, in which the digital link (24) is integral with a coupler coupling the two train vehicles (10, 14).

31. The circuit, according to claim 30, in which the digital link (24) is an RS-485 connection.

32. The circuit, according to claim 31, in which at least one of the cars (10, 14) is sectioned and articulated.

33. The circuit, according to claim 32, in which the peripheral communication device include sign units, emergency intercoms, public address amplifiers, radio systems, consoles or laptop computers.
